# EUROPÄISCHE PATENTSCHRIFT

(11) **EP 1 017 301 B1**
(45) Veröffentlichungstag und Bekanntmachung des Hinweises auf die Patenterteilung: **02.04.2003**
(21) Anmeldenummer: 98933557.5
(22) Anmeldetag: 19.05.1998
(51) Int. Cl.: A47J 37/00

(54) **MOBILE GRILLVORRICHTUNG**
MOBILE GRILL
APPAREIL A GRILLER MOBILE

(30) Priorität: 21.05.1997 DE 19721948
(43) Veröffentlichungstag der Anmeldung: 12.07.2000
(73) Patentinhaber: Rohloff, Bertram, 10243 Berlin (DE)
(72) Erfinder: Rohloff, Bertram, 10243 Berlin (DE)
(86) Internationale Anmeldenummer: DE9801407
(87) Internationale Veröffentlichungsnummer: WO98052450

(56) Entgegenhaltungen:
- WO-A-94/23630
- DE-A- 4 323 659
- GB-A- 2 116 418
- US-A- 5 086 753
- US-A- 5 564 452
- US-A- 5 628 242

## Beschreibung

Die Erfindung betrifft eine mobile Grillvorrichtung, insbesondere einen Horizontalgrill, der vor dem Körper einer die Vorrichtung tragenden Person angeordnet ist, wobei die Person rahmenartig mit einem Gestell aus Quer- und Längsholmen umgeben ist, ferner mit den Längsholmen verbundener Trageriemen zum Umhängen des Gestells, einem im Inneren des Rahmengestells angeordneten Bauchgurt, mindestens einer rückseitig angeordneten Energieversorgungseinrichtung für den bauchseitig angeordneten Grill und / oder anderer Versorgungsempfänger und damit korrespondierenden Versorgungsleitungen und mindestens einem Vorratsbehälter.
Mobile Verkaufseinrichtungen wie Grills mit integriertem Tragegestell mit entsprechenden Feilhalte- bzw. Zubereitungsvorrichtungen zum Feilhalten und Zubereiten von warmen Snacks und Würsten hat es in der Vergangenheit schon gegeben. Bekannt sind auch die Würstchenkessel oder Verkaufseinrichtungen mit einer Stütze im oder auf dem Schuh des Verkäufers.
Aus dem Stand der Technik ist aus der **WO94 / 23630** eine ambulante Verkaufseinrichtung bekannt, die sich durch folgende Merkmale auszeichnet:
Ein sogenannter "Bratwurstbauchladen" vorgestellt als eine ambulante Verkaufseinrichtung zur Zubereitung von Gegrilltem oder Kalt- und Heißgetränken.
Diese ambulante Verkaufseinrichtung hat eine vor dem Verkäufer befindliche Tragplatte auf der eine Zubereitungs-einrichtung, hier Grill, angeordnet ist.
Diese ist über einen seitlich am Träger vorbei in Richtung Rücken des Trägers führenden linken bzw. rechten Holm mit einer hinter dem Rücken waagerecht angebrachten Lastenausgleichsplatte verbunden.
Zu beiden Seiten des Trägers sind Reservebehälter an den Seitenholmen angelenkt.

Diese gesamte Vorrichtung wird durch Nacken- bzw. Schultergurte mit dem Träger verbunden, so daß sich die Lastenausgleichsplatte hinter dem Rücken mit der Tragplatte vor dem Körper des Verkäufers in einem solchen Abstand zueinander befindet, daß sich die gesamte Vorrichtung etwa im Gleichgewicht befindet.

Eine Stütze, die an der Tragplatte befestigt wird, verläuft am Bein des Trägers hinab in den Schuh des Verkäufers, um die entscheidende- notwendige Lastabtragung zu realisieren.
Diese vorgestellte ambulante Verkaufseinrichtung wiegt nach Angaben des Herstellers ohne Ware ca. 56 kg und ist damit ohne Stütze weder zu tragen, noch kann man damit umhergehen. Vielmehr muß der Verkäufer mit Hilfe einer zweiten Person sich an einem verkaufsversprechenden Ort aufbauen lassen, um dann dort zu verweilen.
Auf Grund dieser Stütze und der Ausmaße der Verkaufseinrichtung wird diese von den Behörden als Verkaufsstand eingeordnet und ist damit genehmigungs- und gebührenpflichtig: verliert also wesentlich
an Flexibilität. Von einem Bauchladen, der beweglich und von seinem Träger frei getragen werden muß, kann keine Rede sein.

Desweiteren ist aus dem Stand der Technik das deutsche Gebrauchsmuster DE 296 16 550 U1 bekannt, die als eine mit dem Körper verbundene Tragevorrichtung beschrieben wird.
Diese Tragevorrichtung hat einen vor dem Körper befindlichen Flüssiggas- betriebenen Horizontalgrill, einen Vorratsbehälter an der jeweiligen Körperseite, eine hinter dem Rücken des Trägers befindliche Heizgasflasche und ein horizontales Tragegestell, welches mit Schulterriemen verankert ist.
Das Tragegestell ist ein Rahmen aus einem Stück, in achteckiger Form ausgebildet und besteht aus einem viereckigem Stahlblechhohlprofil.
Am rechten und linken Seitenholm als auch am hinteren und vorderen Querholm sind jeweils zwei Zapfen angesetzt, die einfügbar ineinander mit je zwei Schienen im Eingriff stehen, die wiederum an der unteren Fläche des Flaschenbehälters des Grills und der beiden Vorratsbehälter festgemacht sind. Die Zapfen sind wie auch die Schienen mit einer Bohrung versehen, so daß ein axiales Sicherungsmittel aufgenommen werden kann.
Eine Aufnahmevorrichtung, bestehend aus einer kreisförmigen Stahlblechplatte mit gitterförmigen Öffnungen, steht an deren Oberseite einen hochstehenden Bund vor, zum Aufnehmen der Heizgasflasche.

In der Mitte des Tragegestells ist ein Bauchgurt angeordnet, an dessn linken und rechten Seiten, vom Körper des Trägers führend sich zwei drehbar befestigte Zwischenriehmen befinden, deren Ende an den Schrägholmen festgemacht sind.

Zwei in Längsrichtung parallel verlaufende Schulterriemen sind jeweils mit dem linken bzw. rechten Ende des vorderen und hinteren Querholms lösbar verbunden.
Die axialen Sicherungselemente sind bei diesem Tragegestell Splinte und die Öffnungen in den Stahlblechprofilen können vielgestaltig sein.

Der Nachteil dieser Verkaufseinrichtung ist die nicht gewährleistete Sicherheit sowohl für den Träger als auch für die Öffentlichkeit.
Als besonders gefährlich wird hier vom Amt für Arbeitsschutz der Umstand angesehen, daß bei einem möglichen Schwächeanfall Flüssiggas in die Anlage unkontrolliert geraten könne und somit Explosionsgefahr bestehe.
Die mit dem Körper verbundene Tragevorrichtung weist auch laut dem Lebensmittelaufsichtsamt keinen ausreichenden Schutz vor Witterungseinflüssen, Vogelkot etc. auf und entspricht damit nicht den Anforderungen der Hygieneordnung.
Das Gewicht ist auf Grund der Ausmaße und des zu großen Grills zu schwer und nicht auf Dauer zu tragen. Die Senatsverwaltung für Verkehr in Berlin hat in einer Vorgabe die Maße eines Bauchladens mit 1, 10 m Breite und 50 cm Tiefe definiert. Auch hier läuft die genannte Vorrichtung Gefahr, wegen Überschreitung dieser Maße als normaler Verkaufsstand eingestuft zu werden, welches dann das Tragen der gesamten Verkaufseinrichtung überflüssig machen würde.

Der Auf- oder Abbau dieser Tragevorrichtung benötigt mindestens 2 Personen, da der Träger in den bereits zusammengebauten Grill nicht hineinsteigen kann, ohne das Umkippen der gesamten Vorrichtung von Stützen, zu riskieren. Beim Abbau muß die zweite Person erst wieder die Abstellvorrichtung aufstellen, um dann die Verkaufseinrichtung (im folgenden VE genannt) vom Träger abstellen zu lassen. Die VE muß dann einzeln von außen abgebaut werden, da der Träger die Einzelteile nicht abbauen kann oder nicht heranreicht, weder über die VE darüber oder darunter steigen kann.

Außerdem ist der Träger vierfach an den vorderen Quer- und Langsholmen festgemacht, welches ihn stark daran hindert, bei einer Havarie etwa, die VE schnell verlassen zu können. Auch hier ist er auf eine zweite Person angewiesen.

Die angestrebte Bewegungsfreiheit ist stark eingeschrankt, da die Schultergurte auf die Schultern drücken und die Arme vor dem eigentlichen Arbeitsbereich Grill behindern.

Es ist daher Aufgabe der vorliegenden Erfindung, einen mobilen Grill mit einem speziellen Trage - und Stützsystem zu schaffen, welches es dem Verkäufer bzw. Träger ermöglicht, möglichst **lange Zeit** diesen tragbaren Grill bzw. Bauchladen **bequem** zu tragen. Es soll durch ein leichtes Gewicht eine hohe **Flexibilität und Mobilität** erreicht werden, um moglichst schnell auf Veränderungen der Marktsituation reagieren zu können und vor allem sich wie ein Passant im verkehrsüblichen Maße, im Sinne des Gemeingebrauchs, zu bewegen.
Diese Tragevorrichtung soll den Handel sowohl in der **Bewegung** als auch im Stehen ermöglichen. Durch den Aufbau des Tragegestells und dessen Verbindung zum Körper soll sowohl ein hohes Maß an Beherrschung des Trägers über seine VE erzeugt werden, als auch ein **Gleichgewicht** entwickelt werden, welches ihn ohne Probleme voranschreiten läßt.
Außerdem muß durch eine einfache Konstruktion das **Anlegen und Ablegen** der Verkaufseinrichtung gewährleistet sein.
Durch die Verwendung von entsprechendem Sicherheitszubehör für Flüssiggasbetriebene Anlagen muß ein hohes Maß an **Sicherheit** für den Betreiber garantiert sein, so daß sogar in einem Extremfall, wie Schwindelanfall oder unkontrolliertem Gleichgewichtsverlust, der Träger und seine Umwelt durch die Flüssiggas-betrieben Anlage nicht zu Schaden kommt.
Das Tragegestell mit integriertem Grill muß den grundsätzlichen **hygienischen Anforderungen** entsprechen, damit die Ware durch Witterungseinflüsse oder sonstige negative Beeinflussung unbeschadet bleibt.

Gelöst wird diese Aufgabe durch die im Anspruch 1 aufgeführten Merkmale.
Die Sinnvolle Umsetzung der in der Aufgabe formulierten Ziele sind in den Ansprüchen 2 bis 17 formuliert. Durch diese erfindungsgemäßen Maßnahmen wird folgendes erreicht:
Die erfindungsgemäße mobile Grillvorrichtung wird uneingeschränkt vom Menschen getragen, so daß er die zu erzielende Flexibilität und Mobilität bei entscheidend- weniger Gewicht in einem zufriedenstellendem Maße erreicht.
Damit verfügt der Verkäufer über einen wesentlichen Vorteil, indem er dort auftritt, wo er einen Bedarf für seine Ware vermutet und eben auf diesen Markt zugehen und reagieren kann.
Die Leichtigkeit bzw. Gewichtsminimierung des Tragegestells mit integriertem Grill und die damit einhergehende Bewegungsfreiheit erklärt sich wie folgt:
- als Rückentragegestell 4 wurde ein Flaschentragegestell 4 welches marktüblich bisher zum Auftauen und zur Wildkrautregulierung bekannt ist, verwendet. Dieses Flaschentragegestell 4, ähnlich auch einem Rucksacktragegestell, hält die 3kg Heizgasflasche 21 mit einem umschließenden Metallbehälter 5 auf dem Rücken des Trägers,
- dieser Metallrohrrahmen 4 hält im Rahmen eine Rückenlehne 7 welche durch Federn 8 im Rahmen gespannt bleibt,
- 2 Trageriemen 14 führen vom Rahmen zu den Enden der Längsholme 3 vor dem Grill 1
- 2 Längsholme jeweils auf der linken und rechten Seite verbinden das Flaschentragegestell 4 mit dem vor dem Körper befindlichen Grill 1. Durch diese direkte Verbindung zwischen Rückentragegestell 4 und Grill 1 bedarf es keiner weiteren Aufnahmevorrichtung, so daß sich der Umfang und das Gewicht gegenüber einem quadratisch oder länglich rechteckigen Gestell nach dem Stand der Technik reduziert.

Die Längsholme 3 verlaufen unter den Armen des Trägers auf jeder Seite des Körpers entlang und bilden am Ende eine Öffnung, in die der Grill 1 mit seinen hervorstehenden 2 Zacken auf jeder Seite, die untereinander angeordnet sind, nur hinem gehängt werden braucht.
- ein Vorratsbehälter 10 wird zwischen Bauch des Trägers und Grill eingehängt, so daß weitere Vorratsbehälter und deren Halterungen an den Seiten überflüssig werden. Der verwendete Vorratsbehälter 10 besteht aus einem Drahtgeflecht und wiegt damit weitaus weniger, als der bisher verwendete Behälter aus Aluminiumblech,
- die Fläche des Grills ist auf ein Minimum reduziert worden, so daß auf diesem verhältnismäßig wenig, nur ca. 20 Würste Platz finden. Dafür wurde die Brennerleistung dermaßen erhöht, daß die Ware eine geringere Garzeit benötigt. In dem gefertigten Grill 1 befindet sich eine Brennerschleife mit drei Armen, die somit bekannte Ausrüstung mit mehreren Brennerschleifen entfällt,
- für die Ummantelung 2 des Grills und der Spuckschutzhalterung 2 wurde 2 mm starkes Aluminium verwendet. Ein Prototyp dieses mobilen Grills wiegt mit einer 3kg Heizgasflasche ca. 13 kg.

Das **bequeme Tragen** für eine längere Zeit, hier werden bereits 7 ½ Stunden und mehr erreicht, wird dadurch erzielt, daß
- die Gewichtsverteilung sich auf die Körperteile Schulter, Rücken, Becken - Hüfte sowie Bauch und Oberschenkel verteilt und auch abwechselnd von dem einen Körperteil auf das andere erfolgen kann, und dadurch ein Entspannen der einen Körperregion zu Gunsten einer anderen besteht.
- die gepolsterten Schultergurte 14 das drückende Gewicht auf den Schultern verteilen
- das Rückengestell 4 einen Großteil des Gewichtes von den Schultern entlastend auf dem Rücken verteilt und damit auf einer größeren Rückenfläche 7 den Druck reduziert
- der Vorratsbehälter 10 stützend vor der Bauchmuskulatur liegt und einem naturgemäßen Absinken des Grills entgegenwirkt oder man diesen Vorratsbehälter auf seinem Oberschenkel aufsetzt und das Gewicht des Grills auffängt
- die Verwendung eines Bauchgürtels 12, welcher um die Hüfte des Trägers geschlungen wird. Dieser Gürtel 12 ist seitlich über jeweils einen Riemen 13 an den Längsholmen 3 angelenkt und sorgt damit für festen Sitz des Tragegestells 4,3 am Körper. Bei entsprechendem festen Sitz ist der Träger in der Lage, ohne Trageriemen 14 die mobile Grillvorrichtung zu tragen.
- diese Verteilung des Gewichtes auf verschiedene oder sogar einzelne Körperpartien ist nach dem Stand der Technik eine Neuigkeit in seiner Anordnung des gesamten Stützapparates.

Die erfindungsgemäße mobile Grillvorrichtung ist sehr einfach auf- bzw abbauen.
- die Kompaktheit des Tragesystems ermöglicht dem Träger ein alleiniges Aufbauen, Anlegen, Ablegen und Abbauen
- die mobile Grillvorrichtung mit Tragegestell wird vor dem Gebrauch zusammengebaut, so daß der Träger nur noch hineinsteigen braucht und dann das Gestell 3, 4, I am Körper nach oben zieht. Sodann klemmt er den Vorratsbehälter 10 zwischen Oberschenkel und Bauchmuskulatur und legt dann die Schultergurte 14 parallel oder kreuzweise verlaufend an. Dabei hakt er die losen Enden der Schultergurte 14 an den beiden oberen Längsholmen 3 mittels zweier Karabinerhaken in die vorgesehenen Ösen ein. Danach zieht er die Riemen 13 seines Hüftgurtes fest und sorgt für einen festen aber bequemen Sitz.
- Neu ist nach dem gegenwärtigen Stand der Technik das Anlegen ohne fremde Hilfe, als auch die Tatsache, daß keine Teile im Nachhinein noch angebracht oder festgesteckt werden müssen.

Die Verwendung von Sicherheitszubehör für Hetzgas-betriebene Anlagen sind in ihren Einzelteilen bekannt jedoch deren Verwendung und Anordnung an tragbaren Grillvorrichtungen eine Neuigkeit.
- Ein aufladbarer Akkumulator 17 der im Behälter 5 der EVE 21 oder am Gerät angebracht ist, versorgt einen sogenannten Gasfernschalter 16 und einen Neigungssensor 17 mit 12 V Stromspannung, der Neigungssensor 17 spricht bei einer Schräg- oder Querlage von 45° an, so daß im Ernstfall die Gaszufuhr automatisch abgeschalten wird.
- Die Gasflasche 21 ist im umschlossenen Aluminiummantel mittels eines Spanngurtes 20 gesichert und kann nicht herausfallen
- Die Verwendung einer Schlauchbruchsicherung 18, verhindert bei Beschadigung des Grills oder etwa der Versogungsleitung 22 ein ungehindertes Ausströmen des Gases
- Als Rückengestell 4 wurde ein Flaschengestell gewählt, welches über eine DIN Nummer verfügt und sich in der Praxis beim Tragen von Heizgasflaschen bewährt hat
- Die Verwendung einer Brandecke oder Brandschürze, die im Ernstfall eines Brandes oder Fettentzundung des Grills, diesen luftdicht abdichten könnte und damit den Brand erstickt.
- Der Träger könnte selbständig alle mit dem Tragegestell bestehenden Verbindungen lösen und er kann sich selbstfähig befreien.

Die genannten Sicherheitsvorkehrungen bedeuten am heutigen Stand der Technik gemessen, ein nie gekanntes Maß an Sicherheit für den Träger einer Flüssiggasbetriebenen Anlage und halten auch den Arbeitsschutz-Bestimmungen der Behörden stand.
Die verbesserten hygienischen Bedingungen ergeben sich aus der Verwendung eines Schirmes 23, welcher hinter dem Rücken des Verkäufers am Flaschengestell 9 hineingesteckt werden kann und die leicht verderblichen Lebensmittel vor Witterungseinflüssen. Vogelkot usw. schützt
- Die Verwendung eines in Augenhöhe stehenden 50 cm hohen Spuckschutzes 15 aus 2 mm starken Makrolon, macht das Anniesen oder Anfassen der Ware durch die Kunden unmöglich macht. Der Spuckschutz 15 kann an der Linken Seite durch eine weiterführende Schiene 24 verlängert werden und somit ein von der Seite- Greifen unmöglich machen. Der Verkäufer verkauft also nur über die offene rechte Seite an der Ware vorbei.
- Der Vorratsbehälter 10 vor dem Bauch ist mit einer Klappe versehen und damit verschließbar.
Ein Anniesen der Ware durch den Verkäufer bleibt ausgeschlossen. Der Träger ist auch in der Lage durch das bequeme Sitzen des Tragegestells sich abzudrehen und zu niesen.

Am gegenwärtigen Stand der Technik ist die Verwendung eines Schirmes und das Abschirmen der Ware mittels des Spuckschutzes bei mobilen Grillvorrichtungen eine Neuigkeit, die beim Umgang gerade mit fetthaltigen tierischen Lebensmitteln gefordert wird.

Die Erfindung ist in den anliegenden Zeichnungen dargestellt und wird nachfolgend näher beschrieben. Es zeigt:
Figur 1 - das Tragegestell aus der Vogelperspektive in zusammengesetzter Darstellung
Figur 2 - die Seitenansicht des Tragegestells mit integriertem Grill 1, Grillumschließendes Blech bzw. Plattform mit Halteschiene 2. Sicht -und Spuckschutzvorrichtung 15, Vorratsbehälter 10, Längsholme bzw. Verbindungsgestänge 3, Huftgürtel mit Zwischenriemen 12 - 13, Schultergurte 14. Flaschentragegestell 4 mit Behälter 5 für die EVE 21. Schirm-Einsteckvorrichtung 9 mit Schutzschild 23. Sichtschutzverlängerung mit Metallschiene 24

Das Aufbauen der mobilen Grillvorrichtung geschieht, indem der Träger den Bauchgürtel 12 um die Taille schlingt und feststellt. Dann steigt er in das Innere zwischen den beiden Längsholmen 3 auf jeder Seite hinein. Nun greift er die Längsholme links und rechts zu beiden Seiten und zieht das Gestell 3,4 bis zur gewünschten Höhe an sich herauf.
Der Vorratsbehälter 10 kann nun stützend auf den Oberschenkel abgelegt werden , um nun die Schultergurte 14 über die Schultern zu ziehen. Die Schultergurte sind verstellbar und werden dann durch den Träger selbst angepaßt. Danach werden die Riemen 13 an den Längscholmen 3 eingehakt und festgezogen, so daß diese einen Teil der Last abfangen.

Der Vorratsbehälter 10 wird in die normale Position vor dem Bauch gebracht, um so den Grill ebenfalls stützend zu halten. Dieses Tragegestell 3,4 erlaubt es dem Träger auch, nur auf eins der stützenden Elemente wie: Vorratsbehälter 10, Hüftgürtel 12, Schultergurte 14 mit Rückengestell 4 zurückzugreifen.
D.h. der Träger hält die Grillvorrichtung nur durch den Vorratsbehälter 10 stehend auf seinem Oberschenkel, oder nur durch den Hüftgürtel 12 oder nur durch die Schultergurte 14 mit Rückentragegestell 4. Das Zusammenspiel dieser stützenden Elemente ermöglicht dem Träger eine Vielzahl von Tragevarianten, die der Ermüdung einzelner Körperteile entgegenwirken und erst ein längeres angenehmes Tragen ermöglichen.
Da der Träger diese mobile Grillvorrichtung schon vorher montiert; selbst die Gaszufuhr kann schon vor dem Hineisteigen geöffnet werden; ist er allem in der Lage, sowohl diese auf- als auch abzubauen.

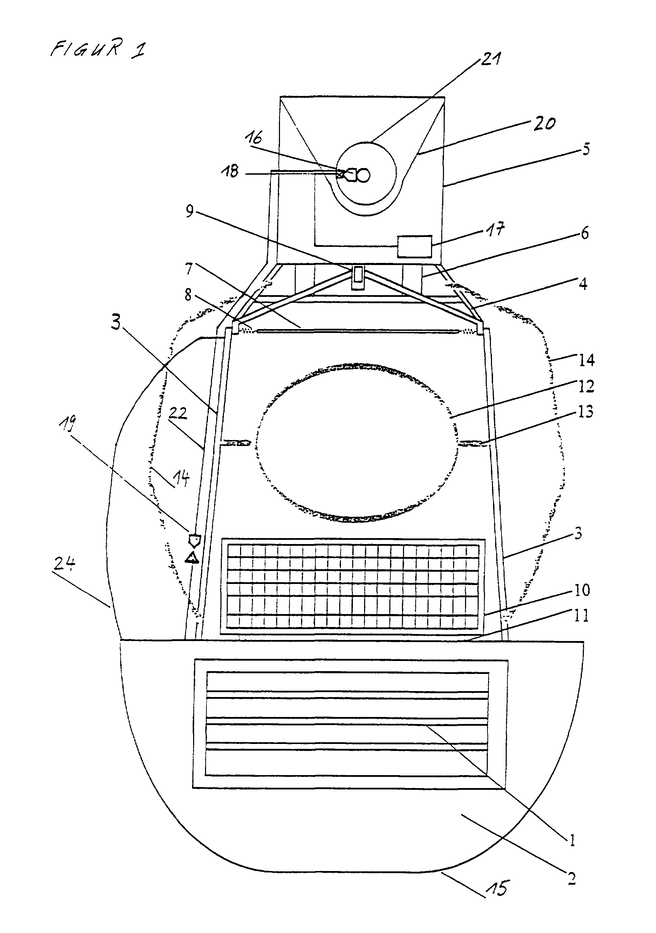

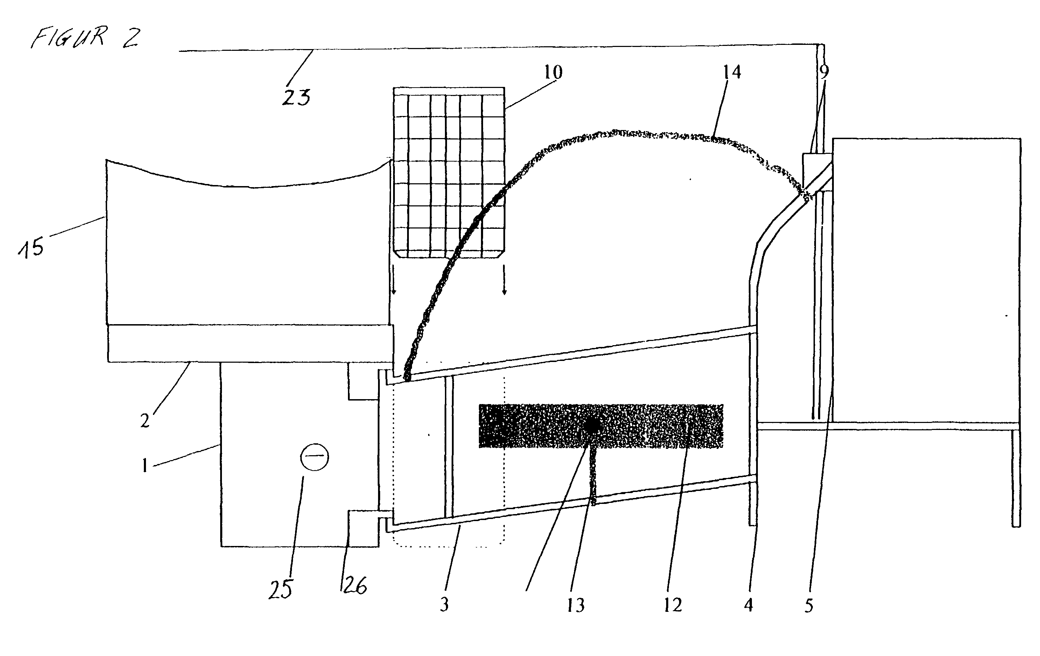

Aus Figur 1 und Figur 2 ist zu sehen, daß der Hauptteil des Tragegestells das Rückentragegestell 4 oder auch Flaschentragegestell bildet (4). Es hat die Form eines rechteckigen Rahmens aus Metallrohr in dessen Mitte eine Rückenlehne 7 mittels Metallfedern 8 gespannt ist, die sich zwischen Rahmen 4 und Decke befinden.
Im unteren Drittel des Gestells gehen zwei Querholme 6 vom Gestell wegführend vom Träger zu einem Dreieck, auf der anderen Seite der Rückenfront zusammen. Dieses Dreieck bildet die Plattform für den Flaschenbehälter (5) und dessen EVE 21, die in den Behälter 5 hineingestellt wird. Ein Deckel verschließt den Behälter.

Im Behälter wird die Gasflasche mittels einem oder mehreren Spanngurten 20 festgezurrt, so daß sie selbst bei Verlust des Gleichgewichtes nicht herausfallen kann.

Im Gasflaschenbehälter 5 wird zweckmäßigerweise der Neigungssensor 17 mit Akkumulator aufbewahrt, der direkten Kontakt zum Gasfernschalter 16 hält. Dieser Neigungssensor kann natürlich auch an jedem anderen Punkt des gesamten Gestells wo es möglich erscheint angebracht werden. Der mitgeführte Akkumulator versorgt den Neigungssensor 17 und den Gasfernschalter 16 mit Strom. Bei einem Neigungswinkel von ca. 45°, was einem Gleichgewichtsverlust gleichkommt, schaltet der Gasfernschalter die Gaszufuhr ab. Der Neigungswinkel als auch die Stromspannung sind variabel gestaltet.

Um eine erneute Gaszufuhr zu erreichen, muß das Gleichgewicht wieder hergestellt sein, der Akku muß erneut eingeschaltet werden, damit ein Knopfdruck am Neigungssensor den Gasfernschalter öffnet.
Bei Verwendung einer Schlauchbruchsicherung 18 ist zusätzlich bei geöffneter EVE 21 der Knopf der Bruchsicherung für 7 Sekunden nach unten zu drücken, um einen Staudruck zu erzeugen. Sodann kann die Gaszufuhr an der Grillvorrichtung 1 mittels Regler 25 in Betrieb genommen werden.

Ein Gasabsperrbahn mit Abziehvorrichtung 19 ist zwischen die Versorgungsleitung geschaltet, um dem Träger die Möglichkeit zu geben, selbst die Gaszufuhr nach Bedarf zu unterbrechen. An der EVE kann die Energiezufuhr mittels eines Reglers ( 25 ) reguliert oder ausgeschaltet werden.

An dem Rahmen des Flaschengestells 4 jeweils links und rechts sind zwei Längsholme (3) untereinander angeordnet. Diese sind mittels einer lösbaren Verbindung, hier Schraubverbindung, am Rahmen 4 festgeschraubt. Diese Längsholme 3 werden mittels eines vertikal verlaufenden Holmes in Höhe des eingesetzten Vorratsbehälters 10 verbunden. Die Längsholme führen in einem Winkel von ca. 110° schräg abfallend am Körper unter den Armen vorbei nach unten.

Die Enden der Längsholme 3 sind mit einer Öse oder Öffnung versehen, in die die am Grill 1 befestigten hervorstehenden nach unten zeigenden Zacken 26 eingehängt werden. Der Grill hängt praktisch in vier Ösen, fest arretiert an den Langsholme. Natürlich kommt auch jede andere lösbare und unlösbare Verbindung in Betracht.

Am oberen zusammenlaufenden Ende des Metallrahmens, des Flaschengestells 4, befindet sich in Nackenhöhe eine Einkerbung 9 zur Aufnahme eines Holms für den Schirm 23. Dieser kann hineingesteckt und herausgenommen werden. Für eine Arretitierung sorgt eine Bohrung in die eine Schraube hineingedreht wird und den Schirmholm feststellt.

Im Inneren des Verlaufes jeweils der beiden Längsholme befindet sich zentrisch angeordnet ein Hüftgürtel 12 der mittels einer Schnalle dem Bauchumfang des Trägers angepaßt werden kann. Seitlich am Hüftgürtel, etwa in der Mitte der beiden Seiten des Korpers, sind jeweils auf einer Seite ein oder mehrere nach unten verlaufende Zwischengurte 13 an der jeweils unteren Verbindungsstange 3 befestigt. Die Zwischengurte sind je nach Umfang, des Verkäufers verstellbar.

Der Hüftgürtel 12 kann außerdem am Flaschengestell 4 hinter dem Rücken des Trägers eingehangt oder mittels eines zusätzlichen Zwischenriemens befestigt werden, um das Rückentragegestell 4 fester an den Rücken des Verkäufers zu drücken, um so besser den entstehenden Druck auf den Rücken verteilen zu können und einem Abkippen der Grillvorrichtung 1 nach unten entgegenzuwirken.

Der Vorratsbehälter 10 wird am Grill in zwei metallene offene Klammern 11 eingehängt. Eine Schraube die hervorsteht, klemmt den Korb von oben in die Klammer ein und verhindert das Herausspringen. Der Vorratsbehälter hat die Form eines Quaders, der nach oben offen steht. Die Öffnung wird durch eine PVC- Glasscheibe oder anderes Material aufklappbar verschlossen.

Um den Grill ist die halbrunde Plattform angepaßt, die zur Aufnahme von Ware als auch aus hygienischen Gründen zum Festmachen des Sicht- und Spuckschutzes 15 dient. Der Spuckschutz besteht hier aus einer 2 mm starken Makrolon- Folie die an der Plattform 2 lösbar festgemacht ist. Zusätzlich kann der Spuckschutz 15 durch eine Verlängerung einer Metallschiene 24 an der Plattform so verlängert werden, daß eine Seite des Verkäufers geschlossen ist. Die Plattform und deren Schiene besteht aus hygienisch unbedenklichem Material.

Der Schutzschild bzw. Schirm 23 der die Ware vor Witterungseinflüssen schützen soll, wird mit dem Holm in die Einkerbung 9 eingeführt und mittels einer Schraube auf die jeweilige Größe des Trägers ein- und festgestellt.
Das Verkaufen erfolgt im Umhergehen stark frequentierter Fußgängerpassagen. Der Träger ist mit diesem Tragegestell in der Lage sich normal, ähnlich einem flanierenden Passanten zu bewegen, Hindernissen auszuweichen.

### Bezugszeichenliste

1 - Grill mit dreispurigem Brenner, Fettauffangschale, Grill-Gitterteil, Flammenschutzblech oder auch als Grillvorrichtung bezeichnet
2- Grill-umschließendes Blech bzw. Plattform mit Haltevorrichtung für Sicht- bzw. Spuckschutz und als Ablage für Lebensmittel dienende Fläche oder auch als Ummantelung des Grills bezeichnet
3 - Längsholme oder Verbindungsstange
4 - Rahmen oder Rückentragegestell oder auch als Flaschentragegestell bezeichnet
5 - Behälter für Heizgasflasche oder auch als Flüssiggasbehälter bezeichnet
6 - Querholme bzw. Bleche zur Befestigung des Behälters 5
7 - Rückenlehne
8- Spannfedern
9 - Haltevorrichtung für Schutzschild bzw. Schirm mit Feststellmoglichkeit bzw. Einkerbung
10 - Vorratsbehälter, verschließbar
11 - Halte - und Verbindungseinrichtung für Vorratsbehälter
12 - Bauchgürtel oder Hüftgürtel
13 - Riemen für Bauchgürtel oder Zwischengurt
14 - Trageriemen oder auch Schultergurte
15- Sicht - und Spuckschutzschild
16 - Gasfernschalter
17 - Neigungssensor mit Akkumulator
18 - Schlauchbruchsicherung
19 - Gasabsperrhahn und Abziehvorrichtung
20 - Spanngurt
21 - Energieversorgungseinrichtung oder auch als Heizgasflasche bezeichnet
22 - Versorgungsleitung von Energieversorgungseinrichtung( EVE ) zum Versorgungsempfänger 1
23 - Schutzschild oder auch als Schirm bezeichnet
24 - Sicht- und Schutzverlängerung mit einsteckbarer Schildverlängerung
25 - Regler zur Regulierung der Energiezufuhr
26 - Einhängevorrichtung oder auch als Zacken am Grill bezeichnet

## Patentansprüche

1. Mobile Grillvorrichtung, insbesondere ein Horizontalgrill, der vor dem Körper einer die Vorrichtung tragenden Person angeordnet ist,
- wobei die Person rahmenartig mit einem Gestell aus Quer- (1, 7, 8) und Längsholmen umgeben ist (3, 4),
- ferner mit den Längsholmen (3) verbundener Trageriemen (14) zum Umhängen des Gestells,
- einem im Inneren des Rahmengestells (1, 3, 4, 7, 8) angeordneten Bauchgurtes (12, 13),
- mindestens einer ruckenseitig angeordneten Energieversorgungseinrichtung (21) für den bauchseitig angeordneten Grill (1) und/oder anderer Versorgungsempfänger und damit korrespondierenden Versorgungsleitungen (22),
- und mindestens einem Vorratsbehälter (10),
**dadurch gekennzeichnet, daß**
- Sicherheitsvorrichtungen (17, 20, 16, 18, 19, 5)zur Vermeidung von unkrontrollierten Energieentladungen der Energieversorgungseinrichtung vorgesehen sind,
- ein Sicht- und Schutzschild (15) vor dem Horizontalgrill (1)angeordnet ist,
- das Rahmengestell mit einer rückenentlastenden, federgespannten Lehne (7, 8) ausgebildet ist, die zusatzlich die vom Rahmengestell gehaltene Energieversorgungseinrichtung (21, 5) hält und gegen Ungleichgewichte stabilisiert.

2. Vorrichtung nach Anspruch 1, **dadurch gekennzeichnet, daß** die Energieversorgungseinrichtung (21) auch als Versorgungseinheit für die Sicherheitsvorrichtungen (17, 20, 16, 18, 19, 5) dient.

3. Vorrichtung nach Anspruch 1 oder 2, **dadurch gekennzeichnet, daß** die Energieversorgungseinrichtung (21) auch zur Versorgung eines Kühl- und/oder Wärmaggregates zum Kühlen und/oder Erwärmen von Lebensmitteln und/oder Getränken und/oder Zubehör geeignet ist.

4. Vorrichtung nach Anspruch 1, **dadurch gekennzeichnet, daß** eine weitere Energieversorgungseinrichtung, die zur Versorgung der Sicherheitsvorrichtungen (17, 20, 16, 18, 19, 5) und/oder eines Kühl- und/oder Wärmaggregates zum Kühlen und/oder Erwärmen von Lebensmitteln und/oder Getränken und/oder Zubehör geeignet ist, mit dem Rahmengestell verbunden ist.

5. Vorrichtung nach einem oder mehreren der vorhergehenden Ansprüche, **dadurch gekennzeichnet, daß** die Energieversorgungseinrichtung eine Batterie/Akkumulator (17) ist.

6. Vorrichtung nach Anspruch 1, **dadurch gekennzeichnet, daß** die Energieversorgungseinrichtung ein Flüssiggas enthaltender Vorratsbehälter (21) ist.

7. Vorrichtung nach einem oder mehreren der vorhergehenden Ansprüche, **dadurch gekennzeichnet, daß** mit dem Rahmengestell (3, 4) und/oder dem Grill (1) und/oder dem Flüssiggasbehälter (21) ein Neigungssensor (17) zur Messung der Schräglage der mobilen Grillvorrichtung (1) verbunden ist, der wiederum mit einem Gasfernschalter (16) zur Unterbrechung der Energiezufuhr in Kontaktverbindung steht.

8. Vorrichtung nach Anspruch 6 und 7, **dadurch gekennzeichnet, daß** der Flüssiggasbehälter (21) auf einem Flaschengestell innerhalb eines den Behälter umschließenden Metall- oder Kunstszoffmantels (5) angeordnet ist und gegebenenfalls zusätzlich durch einen Spanngurt (20) gesichert ist.

9. Vorrichtung nach Anspruch 8, **dadurch gekennzeichnet, daß** das Flaschengestell auch zur Aufnahme von Lebensmitteln und/oder Getränken und/oder Zubehör geeignet ist.

10. Vorrichtung nach einem oder mehreren der vorangehenden Ansprüche, **dadurch gekennzeichnet, daß** mindestens ein verschließbarer Vorratsbehalter (10) zwischen Bauch und Grill angeordnet ist, wobei die Verbindung kontaktlos durch Einklemmen oder mittels am Grill angeordneter Halte- und Verbindungseinrichtungen (11) erfolgt.

11. Vorrichtung nach einem oder mehreren der vorangehenden Ansprüche, **dadurch gekennzeichnet, daß** zur Aufnahme von Lebensmitteln und/oder Getränken und/oder Zubehör eine zusätzliche Haltevorrichtung mit dem Rahmengestell verbunden ist.

12. Vorrichtung nach einem oder mehreren der vorhergehenden Ansprüche, **dadurch gekennzeichnet, daß** eine Abschirmung und Abdeckung der Person und der von der Person getragenen Vorrichtung durch einen Schutzschild (23) vorgesehen ist, wobei dieser Schutzschild mit dem Rahmengestell verbindbar (9) ausgestaltet ist und bis über den Grill (1) reicht.

13. Vorrichtung nach Anspruch 12, **dadurch gekennzeichnet, daß** der Schutzschild aus Metall oder Kunststoff besteht.

14. Vorrichtung nach den Ansprüchen 1 bis 13, **dadurch gekennzeichnet, daß** der Sicht- und Schutzschild (15) vor dem Grill (1) so ausgebildet ist, daß er neben der Vorderseite auch zumindest eine Seitefläche des Grills umschließt.

15. Vorrichtung nach Anspruch 14, **dadurch gekennzeichnet, daß** der Sicht- und Schutzschild (15) mittels einer zusätzlichen, in den Schild einsteckbaren Schildverlängerung (24) so verlängerbar ist, daß er neben der Vorderseite auch zumindest eine Seitenfläche des Grills umschließt.

16. Vorrichtung nach den Ansprüchen 1 bis 13, **dadurch gekennzeichnet, daß** der Sicht- und Schutzschild (15) als Klarsichtscheibe ausgebildet ist und er auf mindestens einem grillseitlich angeordneten Bügel befestigt ist, wobei der Abstand zwischen Schutzschild und Grill so gewählt ist, daß unter dem Sicht- und Schutzschild (15) ein Handtieren möglich ist.

17. Vorrichtung nach den Ansprüchen 1 bis 16, **dadurch gekennzeichnet, daß** die gesamte Vorrichtung auch mit Hilfe der Körpermuskulatur gehalten ist und die Tragegurte (14) nur haltend-unterstützenden Charakter aufweisen.

## Revendications

1. Appareil à griller mobile, particulièrement un appareil à griller horizontal qui est placé devant le corps d'une personne,
la personne est entourée d'un bâti en forme de cadre composé de barres traverses (1, 7, 8) et longitudinales (3, 4),
en outre d'une bretelle (14) liée aux barres longitudinales (3) pour suspendre le bâti,
d'une ceinture ventrale (12, 13) placée à l'intérieur du bâti (1, 3, 4, 7, 8), au minimum d'un dispositif d'alimentation en énergie (21) situé à l'arrière pour l'appareil à griller (1) situé du côté du ventre et /ou d'autres récepteurs d'alimentation et des lignes d'alimentation correspondantes (22),
et au minimum d'un réservoir de stockage (10),
**caractérisé par le fait que**
des dispositifs de sécurité (17, 20, 16, 18, 19, 5) pour éviter des décharges d'énergie incontrôlées du dispositif d'alimentation en énergie
une protection des yeux et protection anti-crachement (15) est placée devant l'appareil à griller horizontal (1),
le bâti est pourvu d'un dossier à ressorts qui ménage le dos (7, 8) et qui aide à tenir le dispositif d'alimentation en énergie (21, 5) tenu par le bâti et il le stabilise contre des déséquilibres.

2. Appareil selon la revendication 1, **caractérisé par le fait que** le dispositif d'alimentation en énergie (21) sert aussi d'unité d'alimentation pour les dispositifs de sécurité (17, 20, 16, 18, 19, 5).

3. Appareil selon la revendication 1 ou 2, **caractérisé par le fait que** le dispositif d'alimentation en énergie (21) est aussi approprié à alimenter un groupe de refroidissement et/ou de chauffage pour réfrigérer et/ou chauffer des produits alimentaires et/ou des boissons et/ou des accessoires.

4. Appareil selon la revendication 1, **caractérisé par le fait que** un dispositif d'alimentation en énergie additionnel approprié à alimenter les dispositifs de sécurité (17, 20, 16, 18, 19, 5) et/ou un groupe de refroidissement et/ou de chauffage pour réfrigérer et/ou chauffer des produits alimentaires et/ou des boissons et/ou des accessoires est lié au bâti.

5. Appareil selon une ou plusieurs revendications susmentionnées, **caractérisé par le fait que** le dispositif d'alimentation en énergie est une batterie / un accumulateur (17).

6. Appareil selon la revendication 1, **caractérisé par le fait que** le dispositif d'alimentation en énergie est un réservoir de gaz liquéfié (21).

7. Appareil selon une ou plusieurs revendications susmentionnées, **caractérisé par le fait qu'**un détecteur d'inclinaison (17) pour mesurer l'inclinaison de l'appareil à griller mobile (1) est lié au bâti (3, 4) et/ou à l'appareil à griller (1) et/ou au réservoir de gaz liquéfié (21), ce détecteur est en contact avec un interrupteur de gaz commandé à distance (16) pour interrompre l'alimentation en énergie.

8. Appareil selon la revendication 6 et 7, **caractérisé par le fait que** le réservoir de gaz liquéfié (21) est placé sur un bâti porteur pour bouteilles, à l'intérieur d'une enveloppe métallique ou plastique (5) qui l'enferme, et que le réservoir, le cas échéant, est additionnellement assuré par une ceinture de serrage (20).

9. Appareil selon la revendication 8, **caractérisé par le fait que** le bâti porteur pour bouteilles est aussi approprié à contenir des produits alimentaires et/ou des boissons et/ou des accessoires.

10. Appareil selon une ou plusieurs revendications susmentionnées, **caractérisé par le fait qu'**au moins un réservoir de stockage verrouillable (10) est placé entre le ventre et l'appareil à griller, il s'agit d'une liaison sans contact par serrage ou au moyen de dispositifs porteurs et de raccordement (11) près de l'appareil à griller.

11. Appareil selon une ou plusieurs revendications susmentionnées, **caractérisé par le fait qu'**un dispositif de retenue additionnel pour des produits alimentaires et/ou des boissons et/ou des accessoires est lié au bâti.

12. Appareil selon une ou plusieurs revendications susmentionnées, **caractérisé par le fait qu'**il est prévu une protection et couverture de la personne et du dispositif porté par la même en forme d'un écran (23) qui est liable au bâti (9) et qui s'étend jusque sur l'appareil à griller (1).

13. Appareil selon la revendication 12, **caractérisé par le fait que** l'écran consiste en métal ou une matière plastique.

14. Appareil selon les revendications 1 jusqu'à 13, **caractérisé par le fait que** la protection des yeux et protection anti-crachement (15) devant l'appareil à griller (1) est conçue d'une façon qu'elle renferme outre l'avant au moins aussi un côté de l'appareil à griller.

15. Appareil selon la revendication 14, **caractérisé par le fait que** la protection des yeux et protection anti-crachement (15) peut être allongée au moyen d'un allongement additionnel insérable (24) d'une façon qu'elle renferme outre l'avant au moins aussi un côté de l'appareil à griller.

16. Appareil selon les revendications 1 jusqu'à 13, **caractérisé par le fait que** la protection des yeux et protection anti-crachement (15) est conçue comme glace transparente et que cet écran est fixé sur au mois un étrier qui se trouve près du côté de l'appareil à griller ; on a choisi une distance entre l'écran et l'appareil à griller qui permet des manipulations dessous de la protection des yeux et protection anti-crachement (15).

17. Appareil selon les revendications 1 jusqu'à 16, **caractérisé par le fait que** toute l'installation est tenue aussi à l'aide de la musculature et que les bretelles n'ont qu'un caractère supplémentaire.

## Claims

1. A mobile grill device, especially a horizontal grill, positioned in front of an operator carrying the device,
- wherein the operator is surrounded by a frame consisting of transverse (1, 7, 8) and longitudinal spars (3, 4) and additionally comprising
- carrying straps (14) connected with the longitudinal spars (3) for taking up the frame,
- a belly band (12, 13) arranged inside the frame (1, 3, 4, 7, 8),
- at least one power supply unit (21) situated on the back and designed for the grill (1) positioned in front of the belly and/or other energy consumers and supply lines (22) corresponding with them,
- and at least one storage bin (10),
**characterized** therein that
- safety appliances (17, 20, 16, 18, 19, 5) are provided for avoiding uncontrolled gas outbursts in the system of the power supply unit,
- a screening protective shield (15) is positioned in front of the horizontal grill (1),
- the frame is provided with a spring-tightened back rest (7, 8) relieving the back which supports additionally the power supply unit (21, 5) supported by the frame and stabilizes it against imbalance.

2. A device according to claim 1 **characterized in that** the power supply unit (21) serves as a supply unit for the safety appliances (17, 20, 16, 18, 19, 5), too.

3. A device according to claim 1 or 2 **characterized in that** the power supply unit (21) is suitable for the supply to a cooling and/or heating device designed for cooling and/or heating foodstuffs and/or beverages and/or accessories.

4. A device according to claim 1 **characterized in that** an additional power supply unit which is suitable for the power supply to the safety appliances (17, 20, 16, 18, 19, 5) and/or to a cooling and/or heating device for cooling and/or heating of foodstuffs and/or beverages and/or accessories is connected with the frame.

5. A device according to any preceding claim **characterized in that** the power supply unit is a battery/accumulator (17).

6. A device according to claim 1 **characterized in that** the power supply unit is a supply tank (21) containing liquid gas.

7. A device according to any preceding claim **characterized in that** a tilt sensor (17) detecting the sloping position of the mobile grill device (1) is connected with the frame (3, 4) and/or the grill (1) and/or the liquid gas tank (21), the tilt sensor again being in contact with a remote gas switch (16) to shut off the power supply.

8. A device according to the claims 6 and 7 **characterized in that** the liquid gas tank (21) is situated in a pack for carrying a bottle within a metal or plastic envelope (5) enclosing the tank and secured additionally by a tightening belt (20) if necessary.

9. A device according to claim 8 **characterized in that** the pack for carrying the bottle is also suitable for carrying foodstuffs and/or beverages and/or accessories.

10. A device according to any preceding claim **characterized in that** at least one storage bin (10) which can be closed is situated between the belly and grill, with the support effected by wedging it in the space between the belly and grill or by means of holders and links (11) attached to the grill.

11. A device according to any preceding claim **characterized in that** an additional holding device designed for placing the foodstuffs and/or the beverages and/or accessories is connected with the frame.

12. A device according to any preceding claim **characterized in that** the operator and the device carried by the operator are screened and sheltered by an umbrella (23), this protective shield being designed linkable (9) with the frame and extending beyond the grill (1).

13. A device according to claim 12 **characterized in that** the protective shield is made of metal or plastic.

14. A device according to the claims 1 - 13 **characterized in that** the screen and the protective shield (15) in front of the grill (1) are designed so as to enclose not only the front side but also at least one of the lateral sides of the grill.

15. A device according to claim 14 **characterized in that** the screen and the protective shield (15) can be extended by means of an additional prolongation of the shield (24) which can be inserted into the shield, so that it encloses not only the front side but also at least one of the lateral sides of the grill.

16. A device according to the claims 1 - 13 **characterized in that** the screening and protective shield (15) is made of a non-clouding windscreen and it is fastened at least to one of the fixing brackets arranged at the side of the grill, with the distance between protective shield and grill determined so that it is possible to operate below the screening and protective shield (15).

17. A device according to the claims 1 - 16 **characterized in that** the whole apparatus can be supported by means of the muscular system of the body of the operator and the carrying straps (14) have only a holding and assisting function.
